# EUROPEAN PATENT SPECIFICATION

(11) **EP 2 271 220 B1**
(45) Date of publication and mention of the grant of the patent: **23.12.2015**
(21) Application number: 09719441.9
(22) Date of filing: 09.03.2009
(51) Int. Cl.: A21D 2/18, A21D 10/00, A21D 8/04

(54) **DOUGH WITH FRUCTAN AND FRUCTAN-DEGRADING ENZYME**
TEIG MIT FRUCTAN UND EINEM FRUCTAN-ABBAUENDEN ENZYM
PÂTE CONTENANT DU FRUCTOSANE ET UNE ENZYME DÉGRADANT LE FRUCTOSANE

(30) Priority: 10.03.2008 EP 08152519
(43) Date of publication of application: 12.01.2011
(73) Proprietor: Novozymes A/S, 2880 Bagsvaerd (DK)
(72) Inventor: MEIER, Felix, CH-4243 Dittingen (CH); RITTIG, Frank, CH-4243 Dittingen (CH); DROST-LUSTENBERGER, Cornelia, CH-8342 Wernetshausen (CH)
(86) International application number: PCT/EP2009/052738
(87) International publication number: WO 2009/112464

(56) References cited:
- WO-A-02/19828
- WO-A-2005/023007
- JP-A- 2004 357 631
- US-A- 5 169 671
- US-A- 5 527 556
- US-A- 5 659 028
- US-A1- 2003 186 940
- US-H1- H2 095
- SILVA R F: "USE OF INULIN AS A NATURAL TEXTURE MODIFIER" CEREAL FOODS WORLD, AMERICAN ASSOCIATION OF CEREAL CHEMISTS, INC, US, vol. 41, no. 10, 1 October 1996 (1996-10-01), pages 792-794, XP002037124 ISSN: 0146-6283
- FRETZDORFF B ET AL: "Reduction of endogenous fructans during rye whole-meal breadmaking", GETREIDE MEHL UND BROT, BOCHUM, DE, vol. 57, no. 3, 1 January 2003 (2003-01-01), pages 147-151, XP009111230, ISSN: 0367-4177

## Description

### FIELD OF THE INVENTION

The present invention relates to uses of an enzyme capable of degrading the at least one polysaccharide into short-chained fructo-oligosaccharide and fructose in making a dough or a baked product. More particularly, it relates to such a process where the bread has an increased softness even after several days of storage.

### BACKGROUND OF THE INVENTION

It has been described in literature that flour, especially rye flour, can contain up to 4% of fructose-containing polysaccharides (Fretzdorff, B. Welge, N. Abbau von getreideeigenen Fructanen während der Herstellung von Roggenvollkornbrot, Getreide Mehl und Brot, 57, 2003, 3, 147-151; as well as Nardi, S. et. al, Nutritional benefits of developing cereals for functional foods, Cereal Research Communications, 2003, 31, Nos 3-4, 445-453). This was also confirmed in a presentation at the 2004 American Association of Cereal Chemists "AACC" conference in San Diego about rye dietary fibre and its influence on the baking activity of rye given by Hansen of the University of Copenhagen. It was said that rye flour contains a lot of fibre, 14.7 - 20.9%, and also 4.5 - 6.4% of fructan, both of them influencing the overall water absorption and giving structure to rye bread as there is no gluten present.

Fructozyme^{®} L is a fructan degrading enzyme product that is produced by submerged fermentation of *Aspergillus niger* CBS 594.94 (patent deposit). Fructozyme^{®} L is a current product in the starch industry (Novozymes A/S). This enzyme product has endo- (inulinase; EC 3.2.1.7) as well as exo-activity (fructan beta-fructosidase; EC 3.2.1.80), which means that it degrades its substrate fructan (inulin or levan) into short chained fructo-oligosaccharides (FOS) and fructose.

Patent documents US 5 527 556, US 5 169 671 A, US 2003/186940 A1, US 5 659 028 A disclose products comprising enzymatic-degraded.

### SUMMARY OF THE INVENTION

The inventors found that increased softness can be achieved in baked products made from dough comprising fructans by adding an enzyme to the dough that is capable of degrading the fructans into short-chained fructo-oligosaccharide and fructose.

The invention relates to a use of an enzyme capable of degrading fructose-containing polysaccharides into short-chained fructo-oligosaccharides and fructose in the production of a dough or a baked product made from dough comprising at least one fructose-containing polysaccharide.

### BRIEF DESCRIPTION OF DRAWINGS

Figure 1 shows the softness of rye/wheat bread containing varying dosages of Inulinase (1-80ppm) versus a control bread with no inulinase. Addition of inulinase gave consistently softer bread than the control. 20ppm of Inulinase showed a significant improved softness compared to the control at all 4 measurements (day 1, 3, 7 and 9).
Figure 2 shows that there was no difference in terms of overall elasticity between the control and any dosage of inulinase used in the breads of figure 1. Only on day 7 is the control significantly more elastic than bread containing various dosages of inulinase.
Figure 3 shows the procedure for softness and elasticity measurements with a Texture Analyzer.

### DETAILED DESCRIPTION OF THE INVENTION

### Dough

The dough of the invention generally comprises rye flour or rye meal and/or other types of meal, flour or starch such as wheat flour, wheat meal, corn flour, corn starch, rye meal, rye flour, oat flour, oat meal, soy flour, sorghum meal, sorghum flour, potato meal, potato flour or potato starch.

The dough of the invention may be fresh, frozen or par-baked.

The dough of the invention is normally a leavened dough or a dough to be subjected to leavening. The dough may be leavened in various ways, such as by adding chemical leavening agents, e.g., sodium bicarbonate or by adding a leaven (fermenting dough), but it is preferred to leaven the dough by adding a suitable yeast culture, such as a culture of *Saccharomyces cerevisiae* (baker's yeast), e.g. a commercially available strain of S. *cerevisiae.*

The dough may also comprise other conventional dough ingredients, e.g.: proteins, such as milk powder, gluten, and soy; eggs (either whole eggs, egg yolks or egg whites); an oxidant such as ascorbic acid, potassium bromate, potassium iodate, azodicarbonamide (ADA) or ammonium persulfate; an amino acid such as L-cysteine; a sugar; a salt such as sodium chloride, calcium acetate, sodium sulfate or calcium sulfate.

The dough may comprise fat (triglyceride) such as granulated fat or shortening, but the invention is particularly applicable to a dough where less than 1 % by weight of fat (triglyceride) is added, and particularly to a dough which is made without addition of fat.

The dough may further comprise an emulsifier such as mono- or diglycerides, diacetyl tartaric acid esters of mono- or diglycerides, sugar esters of fatty acids, polyglycerol esters of fatty acids, lactic acid esters of monoglycerides, acetic acid esters of monoglycerides, polyoxyethylene stearates, or lysolecithin.

In a preferred embodiment, the dough comprises rye flour; preferably 10% (w/w) or more of the total flour content is rye flour, preferably at least 15 %, 20%, 25%, 30%, 35 %, 40%, 45%, 50%, 55%, 60%, 65%, 70%, 75%, 80%, 85%, 90%, or preferably at least 95% (w/w) of the flour is rye flour.

In another preferred embodiment of the invention, the at least one enzyme capable of degrading the at least one polysaccharide into short-chained fructo-oligosaccharide and fructose is an enzyme composition comprising inulinase, EC 3.2.1.7, and/or fructan beta-fructosidase, EC 3.2.1.80; preferably the at least one enzyme is an enzyme composition comprising an inulinase produced by submerged fermentation of *Aspergillus niger.* The enzyme may have exo- and/or endo activity on the fructose-containing polysaccahride, preferably the enzymes has both exo and endo activity on the fructose-containing polysaccahride (such as, FRUCTOZYME L, available from NOVOZYMES A/S, Denmark).

It is preferred that the dough of the invention comprises up to 500 ppm of the at least one enzyme capable of degrading the at least one polysaccharide into short-chained fructo-oligosaccharide and fructose; preferably up to 400 ppm, 300 ppm, 200 ppm, 100 ppm, 80 ppm, 40 ppm, 20 ppm, or more preferably up to 10 ppm of the at least one enzyme.

In a preferred embodiment of the invention, the at least one enzyme is an enzyme composition comprising inulinase, EC 3.2.1.7, and/or fructan beta-fructosidase, EC 3.2.1.80; more preferably the at least one enzyme is an enzyme composition comprising an inulinase produced by submerged fermentation of *Aspergillus niger.*

Yet another preferred embodiment relates to the method of the above aspect, wherein up to 500 ppm is added to the dough of the at least one enzyme capable of degrading the at least one polysaccharide into short-chained fructo-oligosaccharide and fructose; preferably up to 400 ppm, 300 ppm, 200 ppm, 100 ppm, 80 ppm, 40 ppm, 20 ppm, or more preferably up to 10 ppm is added to the dough of the at least one enzyme.

### Additional enzyme

Optionally, an additional enzyme may be used together with the fructan degrading enzyme. The additional enzyme may be an amylase, such as an a alpha-amylase, a maltogenic amylase, amyloglucosidase, a beta-amylase, a cyclodextrin glucanotransferase, or the additional enzyme may be a peptidase, in particular an exopeptidase, a transglutaminase, a lipolytic enzyme, a cellulase, a hemicellulase, in particular a pentosanase such as xylanase, a protease, a protein disulfide isomerase, e.g., a protein disulfide isomerase as disclosed in WO 95/00636, a glycosyltransferase, a branching enzyme (1,4-alpha-glucan branching enzyme), a 4-alpha-glucanotransferase (dextrin glycosyltransferase) or an oxidoreductase, e.g., a peroxidase, a laccase, a glucose oxidase, a pyranose oxidase, a lipoxygenase, an L-amino acid oxidase or a carbohydrate oxidase.

The additional enzyme may be of any origin, including mammalian and plant, and preferably of microbial (bacterial, yeast or fungal) origin and may be obtained by techniques conventionally used in the art.

The maltogenic amylase may be derived from *Bacillus stearothermiphilus* as described in EP 494233 or a variant thereof as described in WO 99/43794.

The lipolytic enzyme may have lipase activity (EC 3.1.1.3), phospholipase A1 activity, phospholipase A2 activity and/or galactolipase activity.

### Baked product

The process of the invention may be used for any kind of baked product prepared from dough, either of a soft or a crisp character, either of a white, light or dark type. Examples are bread (in particular white, whole-meal or rye bread), typically in the form of loaves or rolls, French baguette-type bread, pita bread, tortillas, cakes, pancakes, biscuits, cookies, pie crusts, crisp bread, steamed bread, pizza and the like.

A preferred embodiment relates to the baked product, which has an increased softness after 3 days or more, when compared to an otherwise identical control bread or baked product without the at least one enzyme capable of degrading the at least one polysaccharide into short-chained fructo-oligosaccharide and fructose, as determined herein; preferably after 5 days or more; 7 days or more; or 9 days or more.

### Pre-mix

### Enzyme preparation

The invention provides an enzyme preparation comprising a fructan degrading enzyme, for use as a baking additive in the process of the invention. The enzyme preparation is preferably in the form of a granulate or agglomerated powder. It preferably has a narrow particle size distribution with more than 95 % (by weight) of the particles in the range from 25 to 500 microns.

Granulates and agglomerated powders may be prepared by conventional methods, e.g. by spraying the amylase onto a carrier in a fluid-bed granulator. The carrier may consist of particulate cores having a suitable particle size. The carrier may be soluble or insoluble, e.g. a salt (such as NaCl or sodium sulfate), a sugar (such as sucrose or lactose), a sugar alcohol (such as sorbitol), starch, rice, corn grits, or soy.

The invention relates to a use of an enzyme or enzyme composition capable of degrading fructose-containing polysaccharides into short-chained fructo-oligosaccharides and fructose in the production of a dough or a baked product made from dough comprising at least one fructose-containing polysaccharide; preferably the enzyme is an enzyme composition comprising inulinase, EC 3.2.1.7, and/or fructan beta-fructosidase, EC 3.2.1.80; more preferably the enzyme is an enzyme composition comprising an inulinase produced by submerged fermentation of *Aspergillus niger.*

### EXAMPLES

### Example 1 - Inulinase in wheat/rye bread (50% rye flour)

### Mixed rye/wheat sourdough bread

Mixed wheat/rye dough was prepared as outlined below, containing 50% Intermill Rye flour (Ash 1370) May 04 and Wheat flour (Ash 720) July 04. All dough contained 70ppm Pentopan^{®} 500 and 60ppm ascorbic acid based on wheat flour weight.

| | | |
|---|---|---|
| Bread Type: | Mixed Rye-Wheat-sour dough Bread Free standing 400g (for all types) Lidded 70/30 =500g; 50/50 =600g; 30/70 =700g. | |
| Procedure: | Straight dough with instant sour dough | |
| Flour: | Intermill 30-70% Type 1100 (Rye) and/or 30-70% Type 720 (Wheat) | |

| *Ingredients* | % | *Grams* |
|---|---|---|
| Flour: | 100 | 2000 |
| Type 550 (Wheat) and/or | 30-70 | 600-1400 |
| Type 1370 (Rye) | 30-70 | 600-1400 |
| Instant sour dough | 2000S° | |
| *based on acid degree* | *based on kg rye flour* | |
| | | |
| Water | 64 | 1280 |
| Yeast | 3 | 60 |
| Salt | 2 | 40 |
| Ascorbic-Acid | 0.006 (based on Wheat-flour) | |

All ingredients are added together; they are then mixed to optimum development; the first fermentation takes place at 24°C/15min; the dough is divided into 400g (free-standing) / 500g - 700g (lidded); rounded/rested; molded/panned; proofed: Bread 50-80 min. 32-34°C/80%rH; and finally baked.

### Recipe and procedure:

*Note: to compensate for variation in ingredient quality, minor changes maybe implemented, based on the bakers expertise.*

| **Recipe for 70**/**30** % | **Baker's %** | | **Procedure** | **minutes** |
|---|---|---|---|---|
| Water | 64 | | Fork mixer slow | 2 |
| Flour Total | 100 | | Fork mixer fast | 8 |
| Wheat (Type 720) | 70 | | Evaluation | 5 |
| Rye (Type 1100) | 17.5 | | Table resting 24°C | 10 |
| Instant sour dough* | 12.5 | | Scaling: 4x 400g | 5 |
| Yeast | 3 | | Rounding | 5 |
| Salt | 2 | | Resting on table | 5 |
| Ascorbic acid | 60ppm | | Moulding | 5 |
| | | | Proofing: Bread 32°C; 80%rH | 60 |
| | | | Bake Bread: 230°C | 36 |

| | | | | |
|---|---|---|---|---|
| * Instant sour dough (Fermiplus from Agrano) is dosed based on the required S°/kg rye flour. Every new batch need to be analyzed first of its acid content and pH. Water addition as well as proofing time various depends on the rye flour content. | | | | |

### Work flow:

- Enzymes are added directly to the water in the mixing bowls.
- Add rest of the ingredients.
- Start the three Fork mixers at the same time and mix gently all ingredients to a dough.
- Directly after dough is finished mixing, measure the dough temperature and do the sensory dough evaluation.
- Target dough temp. 26.5°C (+/- 0.5°C)
- After 10min. of resting time, scale 4x 400g for open top pan bread. Please consider the weight changes when making lidded pan bread. Scale for lidded pans: 500g for 30% rye, 600g for 50% rye and 700g for 70% rye.
- Round scaled dough pieces up by hand and let it rest for 5min. (covert).
- Mold the dough pieces into basked size ropes, and set into the, with rye flour floured basked or directly in the greased baking pans.
- Place into the fermentation cabinet for 1 hour at 32-34°C + 80%rH.
- Only the free standing breads are baked with oven steam.
- Volume measurements and sensory evaluations are done as outlined below after the baked product has cooled.

### Setting of equipment:

| **Equipment BL-No.** | **Type** | **Parameter** | **Value** |
|---|---|---|---|
| Dough Mixer | VMI Fork mixer | Time / Speed | 2min. 18U/min. |
| BL018 | | | 8min. 38U/min |
| Sheeter | Type Winkler LR 67 | Roller clearance 1 | 1 /4 |
| BL019 | | | 24/24 |
| | | Pressure board 1+2 | 24 cm / 20cm |
| | | Side panel bar 1+2 | |
| Proofing box | Koma Vollautomat | Humidity | 80%rH |
| BL003 | 1996 | Temperature | 32°C |
| BL038/BL002 | 1998/2002 | Temperature | 34°C |
| Oven | Winkler & Wachtel | Program / Level | 22_Mixed Rye bread basked 1-4 |
| BL001 / BL031 | 1993 / 1996 | | 23_Mixed Rye bread /1-4 |

The breads were stored at 24°C and measured after 1, 3, 7 and 9 days. The baking tests were repeated to enable statistical LSD analysis. The LSD value indicates the significance according to statistical calculation, meaning that if the difference between two treatments is greater than the LSD this difference is significant.

Softness and elasticity measurement of mixed wheat/ rye bread was carried out using a modified version of AACC method 74_09 (see below).

Moistness was evaluated by moistness perception test after 9 days of storage through a sensory panel (5 persons) according to RnD procedures using a two-sided Directional Difference Test (see below).

The term "internal bread characteristics" is defined as crumb structure, which is a subjective evaluation of uniformity, color, cell wall thickness, cell form and grain of crumb by experienced bakers. The term "external bread characteristics" is defined as crust color.

### Dough parameters:

In terms of dough stickiness and softness there was no difference between the control dough and doughs containing 1 to 80ppm of inulinase. Dough containing 5% fructose showed increased stickiness and less extensibility as well as elasticity compared to a control and the doughs containing Inulinase.

### External and internal bread characteristics:

No influence of inulinase regardless of the dosage (1-80ppm) was seen in terms of changes in crust colour, internal or external bread characteristics compared to a control. Only the bread containing 5% fructose seemed to show a darker crust colour.

### Shelf life - crumb texture:

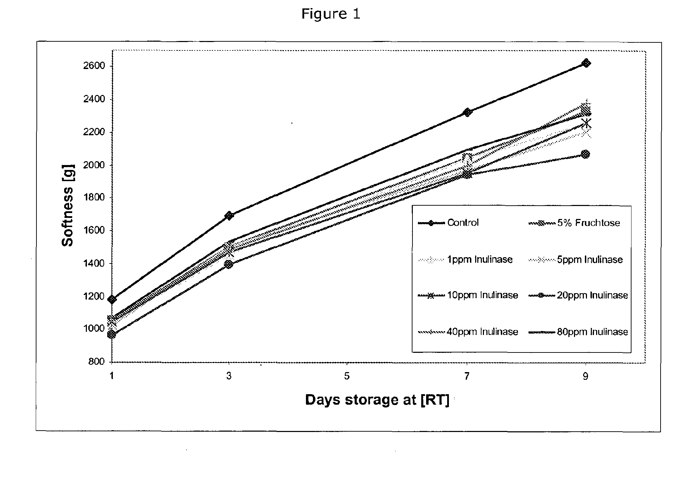

As seen in figure 1, in terms of softness bread containing varying dosages of Inulinase (1-80ppm) gave consistently softer bread than the control. 20ppm of Inulinase showed a significant improved softness compared to the control at all 4 measurements (day 1, 3, 7 and 9).

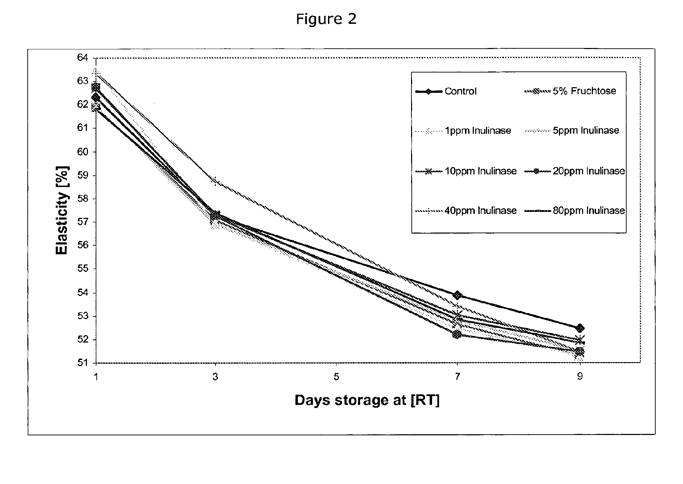

As seen in figure 2, there was no difference in terms of overall elasticity between the control and any dosage of Inulinase used. Only on day 7 is the control significantly more elastic than bread containing various dosages of Inulinase.

The bread containing various dosages of Inulinase and the bread with 5% of fructose seemed to have a more moist crumb compared to the control. This was noticed because during texture analysis these slices stuck to the piston after the measurement. The bread was also evaluated by hand after 9 days of storage. It was difficult to conclude whether there was a difference in moistness between the control, the breads with increasing dosages of inulinase and bread containing 5% of fructose.

### Example 2. Bread volume measurement

Volume measurements are taken after baked product has cooled.
- Baked goods are weighed with a balance (analytical equipment) and recorded.
- Volume of baked goods is measured by seed displacement operated with local manual equipment (mechanical hardware) and recorded in ml or cc (cubic centimetre). Beside the seed displacement, laser equipment such as TexVol can be used to measure the volume of baked goods, here; the results are recorded in the equipment software.
- The specific volume of baked goods is calculated by dividing the volume in cubic centimetres by the weight in grams (ml/g or cc/g).
- Calculation example:
   Volume = 1400ml
   Weight =300g
   1400 / 300 = 4.66ml/g
   Specific volume = 4.66ml/g

### Example 3. Softness and elasticity measurement with texture analyzer

The following protocol is a modified version of the AACC method 74-09.

### Scope

An analytical method to measure pan bread/loaf crumb softness and elasticity. Compared to the AACC method this modified method causes less standard deviation within one loaf of bread. Absolute values for softness and elasticity are different to the AACC method, while relative values and tendencies are comparable.

### P roced u re

After baking and cooling, baked goods are sealed in moisture-proof plastic bags. Specific days of measurement respective length of bread storage and sample preparation are carried out according to the individual baking procedures.

In order to avoid the influence of different volumes on softness, the volume of bread loaves may not differ by more than ±3% respectively lidded pans are used.

Softness (in grams) is defined as the force needed to press a probe 6.25 mm into a crumb of a 25 mm thick slice of bread (P1).

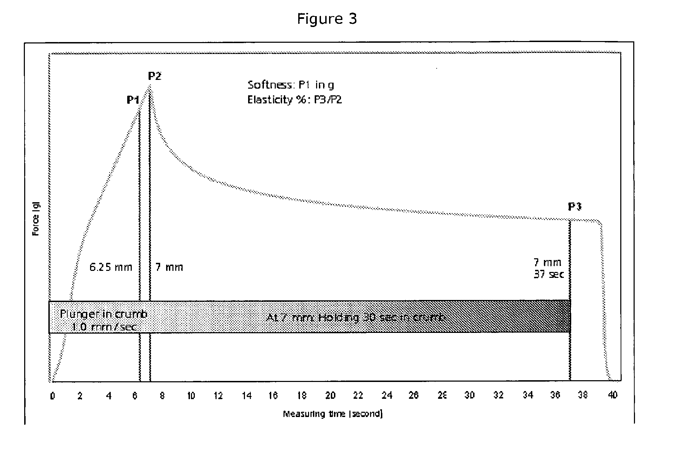

The Elasticity in % is expressed as: (P3/P2) * 100%, wherein
P1 = The force needed to press a probe 6.25 mm into the bread crumb (see Figure 3).
P2 = The maximum force needed to press the probe 7 mm into the crumb (see Figure 3).
P3 = The force needed to keep the probe at 7 mm for 30 seconds (see Figure 3).

### Equipment

1. Electric knife or bread slicing machine
2. Texture Analyzer: Stable Micro System TA.XT2 Software: XT.RA Dimension (SMS) Acrylic probe (40 mm) with edges blunted to remove sharpness.

### Setup - Texture Analyzer

**Measure force in compression:**

| | |
|---|---|
| Option | Hold until time |

| Force | units Grams |
|---|---|
| Test speed | 1 mm/sec |
| Distance | 7 mm |
| Time | 32 sec |

### Method - Texture Analyzer

**Force vs. time:**

| | |
|---|---|
| Force threshold | 5 grams |
| Result file | Graph |
| Peaks | 2 |
| Ratios | 1 |
| Contact force | 5 grams |

**Macro - Texture Analyzer**

| | |
|---|---|
| P1 | Peak at 6.25 mm |
| P2 | Peak at 7mm Hold at 7 mm for 30 sec |
| P3 | Anchor after 30 sec at 7 mm |
| P3/P2 | Elasticity as a ratio in % |

### Example 4. Sensory analysis

The evaluation is done subjective (not analytic) and is based on experience of the trained responsible employs (Baker / Lab technician). At the annual yearly's Baker's meeting an independent calibration trial is done in order to insure comparable sensory results trough all Cereal Food customer solutions baking laboratories.

| **Parameters** | **Definitions of dough properties** |
|---|---|
| Stickiness | The degree to which the dough adheres to ones hands or other surfaces. |
| Softness | The degree to, or ease with, which a dough will compress or resist compression. |
| Extensibility | The degree to which the dough can be stretched without tearing. |
| Elasticity | The degree by which the dough tends to recover its original shape after release from a deforming force. |

| **Parameters** | **Definitions of baked good's properties** |
|---|---|
| Crust colour | Degree of crust browning intensity. |
| Crispiness | Degree of friability/brittleness of the crust. |
| Crust resilience | Degree of flexibility/elasticity of the crust. |
| Symmetry | Describes the shape of a roll or bread. |
| Break | Describes the shape/ oven spring of pan bread. |
| Shred | Describes the shape/ oven spring of pan bread. |
| Crust characteristics | Describes the overall crust quality in a general way, looking at wrinkles, blisters and the smoothness |
| Pan flow | Describes the bottom of a bun, which should show the impression in the pan (good pan flow is desired). All bottom parameters should touch the pan. |
| Cut by the blade | Describes the crease after baking caused by cutting the dough piece. |
| Uniformity | Describes the cell size uniformity. |
| Cell size | Describes the size of the crumb cells. |
| Cell wall | Describes the thickness of the cell walls. |
| Cell form | Describes the shape and depth of the cells, which can be from round to elongate. |
| Crumb colour | The degree of whiteness of the crumb. |
| Average of internal crumb characteristics: | Describes the overall crumb quality in a general way, looking at uniformity cell size and form as well as color. (Can also be the average score of the above internal crumb characteristics.) |

| | |
|---|---|
| Note: not all of the defecations points are to be found in each test trial, the points are chosen from this list as they apply to the various baking procedures. | |

### Parameters of dough and baked product evaluation:

Every test trial contains a reference to which the rest of the test samples are compared to. This means, the evaluation score is always relative to the reference, the reference can various from test set-up to test set-up due to different flour quality or added ingredients. The assessment area is between 1 and 10, whereas the reference is always set with the number 5.

**Dough evaluation:**

| | | | |
|---|---|---|---|
| Stickiness: | 0 Little | 5 Reference | 10 Very |
| Softness: | 0 Less | 5 Reference | 10 More |
| Extensibility: | 0 Low (short) | 5 Reference | 10 High (long) |
| Elasticity: | 0 Low (weak) | 5 Reference | 10 High (strong) |

**Baked goods external:**

| | | | |
|---|---|---|---|
| Crust Color: | 0 Light | 5 Reference | 10 Dark |
| Crispiness: | 0 Low | 5 Reference | 10 High |
| Crust resilience | 0 Low | 5 Reference | 10 High |
| Summetry | 0 Low/flat | 5 Reference | 10 High/round |
| Break | 0 None | 5 Reference | 10 Large |
| Shred | 0 Smooth | 5 Reference | 10 Ragged |
| Crust characteristics | 0 Bad | 5 Reference | 10 Good |
| Pan flow | 0 Less | 5 Reference | 10 More |
| Bloom: | 0 Blind | 5 Reference | 10 Strong |

**Baked goods internal:**

| | | | |
|---|---|---|---|
| Uniformity: | 0 Less | 5 Reference | 10 More |
| Grain: | 0 Open | 5 Reference | 10 Fine |
| Cell Wall: | 0 Thick | 5 Reference | 10 Thin |
| Cell Form: | 0 Round | 5 Reference | 10 Elongate |
| Crumb Color: | 0 Dark/Grey | 5 Reference | 10 Light (Bleached) |
| Average of internal crumb characteristics: | 0 Open grains with thick, round cells | 5 Reference | 10 Uniform, with fine, thin, elongated cells |

## Claims

1. Use of an enzyme capable of degrading fructose-containing polysaccharides into short-chained fructo-oligosaccharides and fructose in the production of a dough or a baked product made from dough comprising at least one fructose-containing polysaccharide.

2. The use of claim 1, wherein the dough comprises rye flour.

3. The use according to claim 2, wherein 10% (w/w) or more of the total flour content is rye flour.

4. The use of any of claims 1-3, wherein the at least one enzyme is an enzyme composition comprising inulinase, EC 3.2.1.7, and/or fructan beta-fructosidase, EC 3.2.1.80.

5. The use of any of claims 1 - 4, which comprises up to 500 ppm of the at least one enzyme capable of degrading the at least one polysaccharide into short-chained fructo-oligosaccharide and fructose.

6. The use according to claim 1, wherein the baked product has an increased softness after 3 days or more, when compared to an otherwise identical control baked product without the at least one enzyme capable of degrading the at least one polysaccharide into short-chained fructo-oligosaccharide and fructose.

## Patentansprüche

1. Verwendung eines Enzyms, das zum Abbauen von fructosehaltigen Polysacchariden in kurzkettige Fructooligosaccharide und Fructose fähig ist, in der Herstellung eines Teiges oder einer aus Teig hergestellten Backware umfassend mindestens ein fructosehaltiges Oligosaccharid.

2. Verwendung nach Anspruch 1, wobei der Teig Roggenmehl umfasst.

3. Verwendung nach Anspruch 2, wobei 10% Gew./Gew. oder mehr des gesamten Mehlgehalts Roggenmehl ist.

4. Verwendung nach einem beliebigen der Ansprüche 1-3, wobei das mindestens eine Enzym eine Enzymzusammensetzung ist, die Inulinase, EC 3.2.1.7, und/oder Fructan-beta-Fructosidase, EC 3.2.1.80 umfasst.

5. Verwendung nach einem beliebigen der Ansprüche 1-4, die bis zu 500 ppm des mindestens einen Enzyms umfasst, das zum Abbauen des mindestens einen Polysaccharids in kurzkettige Fructooligosaccharide und Fructose fähig ist.

6. Verwendung nach Anspruch 1, wobei die Backware eine erhöhte Weichheit nach 3 oder mehr Tagen aufweist, wenn sie mit einer ansonsten identischen Kontroll-Backware ohne das mindestens eine Enzym, das zum Abbauen des mindestens einen Polysaccharids in kurzkettige Fructooligosaccharide und Fructose fähig ist, verglichen wird.

## Revendications

1. Utilisation d'une enzyme capable de dégrader des polysaccharides contenant du fructose en fructo-oligosaccharides à chaîne courte et en fructose dans la production d'une pâte ou d'un produit cuit fabriqué à partir de pâte comprenant au moins un polysaccharide contenant du fructose.

2. Utilisation selon la revendication 1, où la pâte comprend de la farine de seigle.

3. Utilisation selon la revendication 2, où 10 % (p/p) ou plus de la teneur totale en farine est de la farine de seigle.

4. Utilisation selon l'une quelconque des revendications 1 à 3, où au moins une enzyme est une composition enzymatique comprenant de l'inulinase, EC 3.2.1.7, et/ou du fructane bêta-fructosidase, EC 3.2.1.80.

5. Utilisation selon l'une quelconque des revendications 1 à 4, qui comprend jusqu'à 500 ppm de la au moins une enzyme capable de dégrader le au moins un polysaccharide en fructo-oligosaccharides à chaîne courte et en fructose.

6. Utilisation selon la revendication 1, où le produit cuit présente une souplesse accrue après 3 jours ou plus, comparativement à un produit cuit témoin sinon identique sans la au moins une enzyme capable de dégrader le au moins un polysaccharide en fructo-oligosaccharides à chaîne courte et en fructose.
